(19) **Europäisches Patentamt**
**European Patent Office**
**Office européen des brevets**

(11) **EP 2 594 913 A1**

(12) **EUROPÄISCHE PATENTANMELDUNG**

(43) Veröffentlichungstag:
**22.05.2013 Patentblatt 2013/21**

(51) Int Cl.:
***G01H 13/00*** *(2006.01)*

(21) Anmeldenummer: **11189072.9**

(22) Anmeldetag: **15.11.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Siemens Aktiengesellschaft
80333 München (DE)**

(72) Erfinder:
- **Jahnke, Ronny
  14612 Falkensee (DE)**
- **Sczepurek, Tristan
  13129 Berlin (DE)**

(54) **Verfahren zur Bestimmung der Eigenfrequenzen von Turbinen oder Verdichterschaufeln**

(57)     Durch die einmalige Bestimmung von Koeffizienten für eine Umrechnung von Eigenfrequenzen von freien zu eingespannten Turbinen- und Verdichterschaufeln können die eingespannten Eigenfrequenzen anderer Turbinen- und Verdichterschaufeln berechnet werden, in dem nur noch die Eigenfrequenzen freier Turbinen- und Verdichterschaufeln, die einfacher und schneller zu messen sind, ermittelt werden.

**EP 2 594 913 A1**

**Beschreibung**

Die Erfindung betrifft ein vereinfachtes Verfahren zur Eigenfrequenzmessung von Turbinen- oder Verdichterschaufeln.

Turbinen- und Verdichterschaufeln, auch von Gasturbinen, neigen im Betrieb aufgrund der Rotor- und Düsenanregungen zu Schwingungen. Zu große Schwingamplituden infolge Resonanz könnten zu vorzeitiger Ermüdung der Schaufeln und damit zum teilweisen oder vollständigen Verlust (zum Beispiel Radscheibenausbruch) einzelner Schaufeln führen. Hierdurch entstünden schwerwiegende Schäden an der Turbine, in der Regel muss diese gestoppt und einer umfangreichen Revision unterzogen werden.

Um Resonanzen im Betrieb zu vermeiden, müssen die Eigenfrequenzen der Schaufeln im Betrieb bekannt sein und dürfen nicht in bestimmten Sperrbereichen liegen (Vielfache der Rotor- und Düsenanregungen im zulässigen Drehzahlbereich).

Schaufeleigenfrequenzen werden in Presseinspannung in speziellen Schwingungsprüfständen ermittelt, die den realen Betrieb weitgehend nachbilden: Einspannung in Nutklotz vergleichbar zur Radscheibe mit einer großen Gegenmasse vergleichbar zur Radscheibe Einspannkräfte vergleichbar mit Fliehkräften im Betrieb. Temperatureinfluss und Fliehkrafteinwirkung im Schaufelblattbereich werden rechnerisch berücksichtigt.

Problemstellung: Aufgrund der erforderlichen Gegenmassen von mehreren Tonnen und der notwendigen Spannkräfte von mehreren 100 kN sind derartige Prüfstände aufwändig in Beschaffung und Betrieb. Die hohen Spannkräfte führen zu Verschleiß der Spanneinrichtungen und erzwingen damit eine ständige Überwachung. Darüber hinaus reagiert die Messanordnung mit Presseinspannung empfindlich auf Änderungen der Randbedingungen (schlechte Reproduzierbarkeit) und erfordert hohe Personalqualifikation.

Es ist daher Aufgabe der Erfindung oben genanntes Problem zu lösen.

Die Aufgabe wird gelöst durch ein Verfahren gemäß Anspruch 1, 5 oder 6.

In den Unteransprüchen sind weitere vorteilhafte Maßnahmen aufgelistet, die beliebig miteinander kombiniert werden können, um weitere Vorteile zu erzielen.

Die Beschreibung stellt nur eins oder mehrere Ausführungsbeispiel dar.

Vorteile

- ein Prüfstand mit Presseinspannung von Turbinen- und Verdichterschaufeln ist nur für Einmessung oder Anlernvorgang erforderlich.
- die Serienmessung erfolgt schneller und ohne Presseinspannung,
- automatisches Anlernen des Systems erfolgt anhand eines Schaufelsatzes eines Typs.

Vorzugsweise erfolgt

- rückwirkungsfreie Schwingungsmessung mit Mikrofon
- Messung der Schaufel, "frei im Raum";
- einfache und rückwirkungsfreie Messung der Schaufel (Faden / Gummiauflage)
- Umrechnung der "frei" gemessenen Frequenzen in Presseinspannungs-Bedingungen erfolgt automatisch

$$f_{1p} = c_{11}f_{1f} + c_{12}f_{2f} + \ldots + c_{18}f_{8f}$$

$$\blacksquare$$
$$\blacksquare$$
$$\blacksquare$$

$$f_{8p} = c_{81}f_{1f} + c_{82}f_{2f} + \ldots + c_{88}f_{8f}$$

Dabei ist $f1p$ die Eigenfrequenz in der Presseinspannung, die berechnet wird, $f_{1f}$ ist die gemessene freie Eigenfrequenz der eingebauten oder einzubauenden Turbinen- oder Verdichterschaufel und $c_{11}$... der Koeffizient zur

Umrechnung.

Für einen beispielhaften Turbinenschaufelsatz des Typs TLX (also Lauf- oder Leitschaufeln) einer Stufe werden die ersten acht freien Eigenfrequenzen und die ersten achten Eigenfrequenzen in Presseinspannung gemessen.

Mittels einer "general least squares" Parameterabschätzung der oben genannten Formel werden die Parameter $C_{11}$ - $C_{88}$ bestimmt.

Für nachfolgende Schaufelsätze des gleichen Typs TLX, d.h. einer Schaufelstufe desselben Maschinentyps müssen nur noch die freien Eigenfrequenzen gemessen werden.

Diese Messung erfolgt erheblich einfacher und schneller als die Messung in Presseinspannung. Mit Hilfe der bereits ermittelten Koeffizienten $C_{11}$ - $C_{88}$ können die Eigenfrequenzen $f_{1p}$ $f_{8p}$ für Turbinenschaufeln 120, 130 in Presseinspannung bestimmt werden.

Aufgrund dieser Werte werden Turbinenschaufeln 120, 130 ausgesondert oder in einer bestimmten Reihenfolge (eine Hälfte hohe Eigenfrequenz, andere Hälfte niedrigere Eigenfrequenz, oder alternierend) in den Rotor eingebaut.

**Patentansprüche**

1. Verfahren zur Bestimmung der Eigenfrequenzen ($f_{1p}$ ... $f_{8p}$) von Turbinen- und Verdichterschaufeln (120, 130) in Presseinspannung,
bei dem erstmalig und einmalig die Eigenfrequenzen von eingespannten Turbinenschaufeln eines Typs (TLX) und die Eigenfrequenzen ($f_{1f}$ ... $f_{8f}$) von frei gemessenen Turbinenschaufeln desselben Typs (TLX) ermittelt werden und mittels der Formeln:

$$f_{1p} = c_{11}f_{1f} + c_{12}f_{2f} + \ldots + c_{18}f_{8f}$$
$$\vdots \qquad\qquad \vdots$$
$$f_{8p} = c_{81}f_{1f} + c_{82}f_{2f} + \ldots + c_{88}f_{8f}$$

Koeffizienten ($c_{11}$... $c_{88}$) bestimmt werden und
dann für nachfolgende Schaufeln (120, 130) oder Schaufelsätze desselben Typs (TLX) werden nur noch die Eigenfrequenzen ($f_{1f}$ ... $f_{8f}$) einer freien Turbinenschaufel (120, 130) desselben Typs (TLX) oder eines Schaufelsatzes gemessen und
die Eigenfrequenzen ($f_{1p}$ ... $f_{8p}$) für eingespannte Turbinenschaufeln desselben Typs (TLX) werden mit den vorab ermittelten Koeffizienten berechnet:

$$f_{1p} = c_{11}f_{1f} + c_{12}f_{2f} + \ldots + c_{18}f_{8f}$$
$$\vdots \qquad\qquad \vdots$$
$$f_{8p} = c_{81}f_{1f} + c_{82}f_{2f} + \ldots + c_{88}f_{8f}.$$

2. Verfahren nach Anspruch 1,
bei dem eine Parameterabschätzung "general least squares" durchgeführt wird,
um die Koeffizienten ($c_{11}$ ... $c_{88}$) zu bestimmen.

3. Verfahren nach Anspruch 1,
bei dem die freien Eigenfrequenzen ($f_{1f}$ ... $f_{8f}$) mit einer Fadenaufhängung der Turbinen- oder Verdichterschaufeln (120, 130) gemessen werden.

4. Verfahren nach Anspruch 1,

bei dem für die Messung der freien Eigenfrequenzen ($f_{1f}$ ... $f_{8f}$) eine Unterlage,
insbesondere Gummiauflage
verwendet wird.

5. Verfahren zum Messen von Turbinen- und Verdichterschaufeln (120, 130),
bei dem die Eigenfrequenzen ($f_{1p}$ ... $f_{8p}$) in Presseinspannung nach einem oder mehreren der vorhergehenden Ansprüchen bestimmt werden.

6. Verfahren zum Einbau von Turbinenschaufeln (120, 130), bei dem die Eigenfrequenzen für die Eigenfrequenzen ($f_{1p}$ ... $f_{8p}$) in Presseinspannung nach einem oder mehreren der vorhergehenden Ansprüchen bestimmt werden und der Rotor in Abhängigkeit von dieser Eigenfrequenz ($f_{1p}$ ... $f_{8p}$) mit den Turbinenschaufeln oder Verdichterschaufeln (120, 130) bestückt werden.

7. Verfahren nach Anspruch 6,
bei dem eine Rotorhälfte mit Turbinenschaufeln (120, 130) oder Verdichterschaufeln höherer Eigenfrequenz und die andere Rotorhälfte mit Turbinenschaufeln oder Verdichterschaufeln tieferer Eigenfrequenzen bestückt werden.

8. Verfahren nach Anspruch 6,
bei dem die Turbinenschaufeln (120, 130) oder Verdichterschaufeln abwechselnd mit höherer und tieferer Eigenfrequenz in Umfangsrichtung in dem Rotor umgebaut werden.

# EP 2 594 913 A1

**EUROPÄISCHER RECHERCHENBERICHT**

Nummer der Anmeldung

EP 11 18 9072

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MANGESH S KOTAMBKAR: "Exploring vibration based method for crack detection in turbine blade", MECHANICAL AND ELECTRICAL TECHNOLOGY (ICMET), 2010 2ND INTERNATIONAL CONFERENCE ON, IEEE, PISCATAWAY, NJ, USA, 10. September 2010 (2010-09-10), Seiten 28-33, XP031773305, ISBN: 978-1-4244-8100-2 * Zusammenfassung * * Seite 32 * ----- | 1-8 | INV. G01H13/00 |
| A | US 4 878 810 A (EVANS DAVID H [US]) 7. November 1989 (1989-11-07) * Zusammenfassung * ----- | 1-8 | |

**RECHERCHIERTE SACHGEBIETE (IPC)**

G01H
F01D
G01N

Der vorliegende Recherchenbericht wurde für alle Patentansprüche erstellt

| Recherchenort | Abschlußdatum der Recherche | Prüfer |
|---|---|---|
| Den Haag | 3. Oktober 2012 | Fernandes, Paulo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 18 9072

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2012

| Im Recherchenbericht angeführtes Patentdokument | Datum der Veröffentlichung | Mitglied(er) der Patentfamilie | Datum der Veröffentlichung |
|---|---|---|---|
| US 4878810 A | 07-11-1989 | KEINE | |

Für nähere Einzelheiten zu diesem Anhang : siehe Amtsblatt des Europäischen Patentamts, Nr.12/82

EPO FORM P0461